# EUROPEAN PATENT APPLICATION

(11) **EP 2 107 044 A1**
(43) Date of publication of application: **07.10.2009**
(21) Application number: 09251039.5
(22) Date of filing: 02.04.2009
(51) Int. Cl.: C02F 1/78, E04H 4/12, C02F 103/42

(54) **Integrated pump housing**

(30) Priority: 02.04.2008 US 72871 P; 25.08.2008 US 229641
(71) Applicant: Del Industries, Inc., San Luis Obispo, CA 93401 (US)
(72) Inventor: Lavelle, Dennis, Paso Robles, CA 93446 (US); Cannavino, Joseph, Atascadero, CA 93422 (US)
(74) Representative: Critten, Matthew Peter

(57) **Abstract**

The present invention is drawn to fluid delivery systems containing a pump and at least one additional element or function integrated as part of the pump assembly. Additional elements may include a heater assembly component, a filter component, an additive reservoir component, an ion generator component, an ozone generator component (110), an adductor component, and a pressure bypass valve component, wherein said pump and at least one element are comprising in a single apparatus. The fluid delivery systems may be useful for swimming pools, spas, jetted tubs, agricultural water delivery systems, fountains, water well systems, laundry systems and the like.

## Description

### Field of the Invention

The present invention is directed to fluid pumps with integrated features including one or more of the following: a ozone generator component, an injector or adductor component(such as a venturi) for the introduction of additive into a fluid stream, a pressure bypass relief valve component, a filter component and/or a heater component. Such devices and systems containing such devices may be useful in, for example, swimming pools, spas, jetted tubs, agricultural water delivery systems, fountains, water well systems, laundry systems and the like.

### Background of the Invention

The present invention relates to systems for circulating or transporting fluids, such as water, from one location to another. In particularly preferred aspects, the invention concerns a pump for the transport or circulation of liquid, wherein the pump or pump housing contains one or more additional feature, such as an ozone generator, an injector, such as a venturi for the introduction of additives to the fluid stream, and/or a fluid bypass, such as a bypass with a pressure relief valve. As used in this patent application a "venturi" is a constriction or narrowing in a fluid flow for creating suction and/or measuring flow rate.

In particularly important uses, pumps are used in various fluid-based applications, including, without limitation, spas and jetted tubs, water wells, for the distribution of water to agricultural crops, and in laundries, particularly residential laundries. In many of these uses additives are desirably introduced in the fluid stream.

For example, preserving the potablity of water for various uses can be an important consideration, and therefore the introduction of a sanitizing, disinfecting or sterilizing component (hereinafter a "sanitizing component") into the fluid stream may be desirable. Sanitizing components often include at least one of chlorine, fluorine and ozone. Of these, ozone leaves no toxic or harmful residue or reaction products following disinfection, and is, in many cases preferable to a halide such as chlorine or fluorine.

Thus, in an important class of aspects and applications the invention relates to apparatus and methods specifically configured and adapted for the treatment, for example, for the purification, of waters used in swimming pools, spas and jetted tubs.

As indicated above, swimming pools, spas, jetted (hot) tubs and the like are often treated with active compounds to place or maintain the water therein in a purified or sanitized condition. Compounds and ions such as chlorine, fluorine and ozone have been used to sanitize the relatively large volumes, for example, hundreds or thousands of gallons, of water in such pools, spas, tubs, reservoirs, etc. As used herein, the terms "spa" and "jetted tub" refer to systems which hold or contain a body of liquid aqueous medium, hereinafter referred to as water, which is often heated, in a reservoir which is smaller than a swimming pool, but is sufficiently large so that an adult human being can be completely, or substantially, submerged or immersed in the water contained in the reservoir.

Spas are often used by submerging all or a major portion of one's body in the water in the reservoir for recreation and/or relaxation. Additional, separate purifying or sanitizing components are also included in spa waters to control bacteria, algae, etc., which are known to contaminate such waters. Very low concentrations of these active materials are used in order to avoid harming sensitive parts of the body--since such spas, tubs, etc. are sized so that the entire body can be immersed in the water and to minimize costs, because of the relatively large volume of water to be treated.

For example when ozone is used as a sanitizing component the normal concentration of ozone used to purify or sanitize the water in a spa or tub is often in the range of about 0.005 to about 10 parts per million (ppm) based on weight of ozone per volume of water (w/v). In other applications the range of ozone concentration as is more on the order of from about 0.01 to about 0.05 ppm, or to about 0.1 ppm, or to about 0.5 ppm or to about 1 ppm or to about 5 ppm. It is understood that by specifying a range of concentrations in this patent application, the Applicants intend that each and every concentration between the lower and higher value of the range is to be regarded as specifically disclosed.

Typically, ozone is generated on site for use in purifying pool, spa and tub waters. Conventional ozone generators used for such service include a light source emitting ultraviolet (UV) light; these lamps are generally sealed. Such conventional ozone generators are generally effective to make ozone, although they require air to be exposed to the generator for a relatively long period of time. These generators have certain additional drawbacks: for example, the UV light lamp is relatively bulky, can burn out (often requiring system disassembly and lamp replacement) and are relatively inefficient in producing the desired amounts of ozone.

Ozone generators such as the ozone generating apparatus disclosed in e.g., U.S. Patent No. 6,699,441 operate using the corona discharge method, wherein a spark or electrode discharge provides the energy for the reaction 3 O₂- *electricity* → 2 O₃. These generators are usually cost effective, do not require an oxygen source other than the ambient air, and are generally cost effective.

Ozone generators generally have an oxygen inlet and an outlet for the directed release of ozone. However, the exposure of oxygen to the generator, and the transfer of ozone to the fluid with which it is intended to be exposed is often passive unless there is a pump or suction source.

Suction can be generated, without limitation, by the action of flowing fluid. Thus, if water is flowing at a given rate (such as when being circulated through a "closed" spa or tub system or delivered, for example in an open irrigation system), suction can be generated by decreasing the cross-sectional area of a section of the tube or pipe through which the fluid flows, thus taking advantage of the Venturi effect: the drop in fluid pressure resulting when an incompressible fluid flows through a constricted section of pipe or tube. An opening at right angles to the direction of fluid flow substantially at the point of constriction provides an injector or introduction point for addition of substances, including solids, fluids and gases, into the flowing fluid.

Thus, if a pump forces the fluid through a tube connected to a system consisting of a venturi to increase the water speed (the diameter decreases), a short piece of tube with a small hole in it, and lastly a venturi that decreases speed (so the pipe gets wider again), air will be sucked in through the small hole because of changes in pressure. At the end of the system, a mixture of fluid and air will appear. If the small hole is connected to the outlet of, for example, an ozone generator, the ozone produced by the generator will be drawn into and mixed with the flowing water. The disinfectant need not be ozone, one can use a venturi injector to introduce chlorine gas into the water.

Of course, the small hole may be connected to whatever is desired to be introduced into the water or other fluid. Therefore in agricultural applications a liquid or gaseous fertilizer or pesticide may be mixed with the water through a venturi prior to watering the crop.

One can control the amount of additive introduced into the fluid by the degree of constriction and the velocity of fluid flow in the unconstricted portions of the pipe or tube, since the differences in pressure (and thus the amount of suction) is directed by the differences in fluid velocity before and during the constriction of the fluid flow.

Sometimes the amount of suction generated as a result of fluid flow can be in excess of that required for a particular purpose. In such a case, a fluid bypass can be desirable, in which the degree of constriction causing the venturi effect is lessened when the pressure reaches a threshold of negative pressure (suction). In such a case a valve, which can be actuated by such increase in pressure, can open to increase the cross-sectional area of the construction, and thus permit the water to flow with a minimum of obstruction. For example (and without limitation), the valve may be spring-actuated such that when the suction or flow velocity exceeds the spring force the valve opens, thus permitting a greater fluid flow than the venturi normally permits.

Systems for circulating fluids, for example for the circulation of water in a spa, are well known; see e.g., U.S. Patent No. 6,372,148. An example of such a system is shown in Fig. 1, wherein a pump maintains water flow from a spa or vented tub by way of an outlet to a filter component, a heater component, and a bypass line containing a venturi assembly component, which acts as an ozone adductor to suction ozone-containing gases from the ozone generator through a conduit into the fluid passing through the bypass line. The bypass line then reconnects with the main water line and returns treated water to the spa or vented tub through the return line and tub inlets.

As this figure illustrates, the pump, venturi component and bypass line connections are all in separate parts of the water circulation assembly, and therefore the installation and maintenance of this system, or of more than one component of such a system, is a somewhat time-consuming proposition.

Water pumps (or compressors), chemical generators (such as ozone or ion generators) and injectors (adductors) have been successfully used in combination for mixing or dissolving two or more substances together. Historically they have been separate items working in a system, as described above.

Additionally or optionally, filter assemblies (particularly those having replacable water filters of moderate to reasonably fine mesh) and water heater elements may be added or integrated into a pump assembly for even greater consolidation and coordination of elements, and ease of installation, repair and replacement of one or more such element.

For example, the amount of suction generated by the venturi is directly proportional to the velocity of the water or other substantially non-compressible fluid flowing through the tube or pipe at the point at which a port or opening is made, according to Bernoulli's equation. The velocity of the fluid at a given point in the system is, in turn, proportional to the cross-sectional area of the conduit at that point. Therefore, a venturi and suction port can be made specially to fit the dimensions of the particular pump elements (e.g., outlet, interior, or inlet) integrated therewith.

The present invention therefore combines a pump or compressor with at least one, or at least two, or at least three additional components into one integral part. Integrating these components lowers overall cost and complexity and eases the proper "matching" or "tuning" the items to each other and the application.

Thus, the present invention concerns a pump or compressor assembly. The pump may be of any useful type for the circulation or delivery of a fluid, depending upon its application. Thus such pumps may include, without exception, rotodynamic pumps (such as centrifugal pumps) which have bladed impellers which rotate within the fluid to increase the fluid's pressure energy, and positive displacement pumps (such as Roots-type pumps, reciprocating-type pumps), which cause a fluid to move by trapping a fixed amount of the fluid and then forcing the displaced volume into the pump outlet.

In the present invention the pump has at least one additional feature or functional component integrated into the pump housing or body. The feature or functional component may be a means for generating, storing, and/or providing a sanitizing component to the fluid being pumped.

For example, such a means may include an ozone or ion generator integrated as part of the pump assembly. The ozone or ion generator may be of any useful type, such as the UV-emitting or the coronal discharge type. Preferably the ozone or ion generator, if present, is of the corona discharge type, such as the chip-based ozone generator design shown and described in U.S. Patent No. 6,699,441.

Thus, the ozone or ion generator is integrated into or onto the electrical motor housing of the pump to provide simplified mounting, wiring and/or control of the ozone/ion generator. The ozone or ion generator may be integrated into the compartment of the motor that traditionally houses the electrical/power wire connections for the motor. Alternatively, the ozone generator may be attached to the side of the motor (similarly to the way many motor starting capacitors are currently mounted). The synergy of motor and ozone (or ion) generator may be further enhanced by cooling the ozone/ion generator by the pump motor cooling fans or by using the pump motor body as a heat sink.

In other, currently less preferred embodiments, a reservoir configured for holding a volume of a gaseous or liquid sanitizing component may be attached to the pump housing,

In either case, a conduit transfers the sanitizing component from the reservoir or generator to the flowing water or other fluid. The point at which the sanitizing component is added to the fluid flow may be before the fluid enters the main portion of the pump, at the pump inlet, within the pump itself, at the pump outlet, or after the pump outlet. The sanitizing component may be injected from the conduit into the fluid flow under pressure (such as by use of a secondary pump, or under the pressurized influence of fluid pressurized by the main pump). Alternatively, the sanitizing component may be added to the fluid flow under suction, such as by the use of a venturi.

In a second aspect, the present invention may comprise a pump or pump assembly comprising one or more venturi injector(s) or adductor(s) is integrated into the pump housing. The integration of the venturi injectors as part of the pump makes the installation, servicing and replacement of the sanitation and pump systems easy and also lowering the cost of such work facilitates matching and the overall configuration of the system.

In addition to the integration of the venturi with the pump assembly, a preferred embodiment of the invention also has a suction port in fluid connection with the venturi, preferably having a check valve to prevent leakage of fluid within the pump when the pump is at rest.

A venturi is an effective means by which a suction force may be created by the action of a fluid under pressure. However, since the force is created by the constriction of the interior of a pipe or other conduit through which a fluid is flowing, the constriction by its very nature creates suction at the cost of impeding the flow of the fluid. It would be advantageous if the venturi provided substantially only that degree of intra-pipe constriction necessary to create the desired amount of suction (sufficient to mix the sanitizing component with the fluid) were to impede the flow of the fluid).

In a third embodiment of the present invention, a pump comprising an integrated venturi and suction port also contains one or more bypass valve and or port placed in parallel to the fluid flow and integrated into the pump housing to lower cost, simplify matching and overall configuration and create a larger window of operation in regards to flows and pressures.

The bypass valve operates to open the constriction in the venturi when the flow velocity increases beyond a certain desired amount, for example the velocity necessary to generate the desired amount of suction. Thus, if the venturi generates excess suction beyond than necessary to cause the mixing and injection of the desired amount of additives such as, for example, sanitizing components or fertilizers, the bypass valve can open, thus permitting a greater volume of water to flow through the constriction than would otherwise be the case. In one embodiment the bypass valve is located within the constriction of the pipe or tube creating the venturi, and functions by opening the "throat" of the venturi when the pressure exceeds a certain amount.

A fourth embodiment of the present invention comprises a pump containing both an integrated ozone or ion generator (or reservoir for additional additives such as fertilizers) as seen in the first embodiment, and an integrated venturi with a suction port, as seen in the second embodiment. Just as before, the reservoir, or ozone or ion generator may be located either on the body of the pump housing or within the pump motor housing, where the pump motor fan may cool it. The ozone or ion generator may also or alternatively be cooled using the pump housing as a heat sink.

In a fifth embodiment, the present invention may comprise a pump into which a reservoir or an ion or ozone generator is placed, a venturi is integrated into the pump housing together with a suction port, and a bypass valve is also included, for example, within the throat of the venturi.

Additional aspects of each of these embodiments may optionally include the integration of a fluid filter, such as a water filter assembly within the pump housing apparatus; the filter assembly may provide of access to and replacement of the filter at necessary and periodic intervals.

### BRIEF DESCRIPTION OF THE DRAWINGS

Fig. 1 shows a circulating water system for use in a spa, comprising separate pump, filter, heater, venturi and bypass components.
Fig. 2 shows an embodiment of a pump and pump housing with an integrated ozone or ion generator.
Fig. 3 shows an embodiment of a pump and pump housing with an integrated venturi adductor and suction port.
Fig. 4 shows an embodiment of a pump and pump housing with an integrated venturi adductor and suction port, and an integrated bypass valve within the venturi.
Fig. 5 shows a detailed view of one embodiment of a bypass valve.
Fig. 6 shows a detailed view of a second embodiment of a bypass valve.
Fig. 7 shows an embodiment of a shows an embodiment of a pump and pump housing with an integrated venturi adductor and suction port, with an integrated ozone or ion generator.
Fig. 8 shows an embodiment of a pump and pump housing with an integrated venturi adductor and suction port, with an integrated ozone or ion generator and an integrated bypass valve within the venturi.

### DETAILED DESCRIPTION OF THE INVENTION

The following descriptions are intended to provide detailed disclosure of specific preferred embodiments of the invention, but are not intended to encompass the entire scope of the invention. The claims that conclude this specification define the invention, and the following disclosure is provided simply as an aid to their understanding.

The present invention is drawn to a revolutionary pump assembly and new methods for distributing a fluid and accomplishing at least one of the following: a) adding other gaseous or liquid fluids to the primary fluid stream, b) providing an integrated flow bypass valve to the flow stream.

Prior to the present invention pumps, sanitizing components (and apparatus for their storage or generation), injectors or adductors (including venturis), bypasses and bypass valves, heaters, and filters have been separate components in a water or other fluid distribution or circulation system.

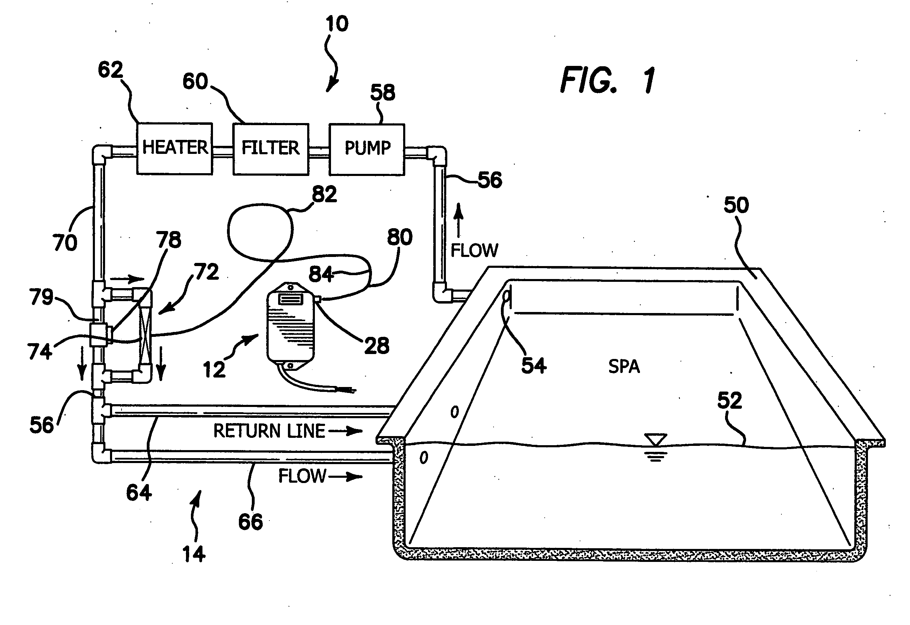

As one example, Fig. 1 shows a prior art water distribution system for a spa. Spa **50** includes a quantity of heated and circulating water **52**, for example, about 500 to 1000 gallons in volume. The spa **50** is equipped with a water circulating system in which water from the spa passes through spa outlet **54** into conduit **56** through spa pump **58,** spa filter **60** and spa heater **62**. Eventually the pumped, filtered and heated water is passed back to the spa **50** through return lines **64** and **66**.
In Fig. 1 piping segment **70** (a part of conduit **56**), downstream of heater **62** is divided to provide a bypass line, shown generally at **72.** Bypass line **72** includes a venturi assembly **74**, of generally conventional construction, which acts as an ozone adductor to suction ozone-containing gases from ozone generator **12** into bypass line **72**. The combined ozone-containing gases and water are returned to the main water conduit **56**, as shown in Fig 1. A valve **78**, of conventional design, is located in water conduit **79** and can be adjusted to control the amount of water passed through bypass line **72**. The ozone-containing gases from ozone generator **12** are passed through housing - outlet 28 and through ozone conduit **80** into the water flowing through bypass line **72**. The suction created by venturi assembly **74** causes ozone to flow through ozone conduit **80**.

Ozone conduit **80** includes a water trap loop **82** located above venturi assembly **74.** This water trap loop **82** acts to protect the ozone generator from being exposed to water in line **56** and bypass line **72.** In addition, ozone conduit **80** includes a check valve **84**, of conventional construction, which effectively prevents liquid fluid flow in the ozone conduit back to the ozone generator **12.** This feature inhibits, or even substantially prevents, any water from line **56** and bypass line **72** from entering ozone generator **12.**

Apparatus **10** functions as follows. When it is desired to purify/sanitize the water **52** in spa **50,** operation of the pump **58** and ozone generator **12** is initiated. This causes water **52** to flow from spa **50** through line **56** into pump **58,** filter **60**, heater **62** into piping segment **70.** At this point, a minor amount, that is, less than about 50% of the total water passing through segment **70** is caused to flow through bypass line **72** and venturi assembly **74.** This results in a suction being generated by the venturi and causes ozone-containing gases being generated by ozone generator **12** to be drawn into ozone conduit **80** into the water in bypass line **72**, which is ultimately returned to the spa via return line **64** and **66.**

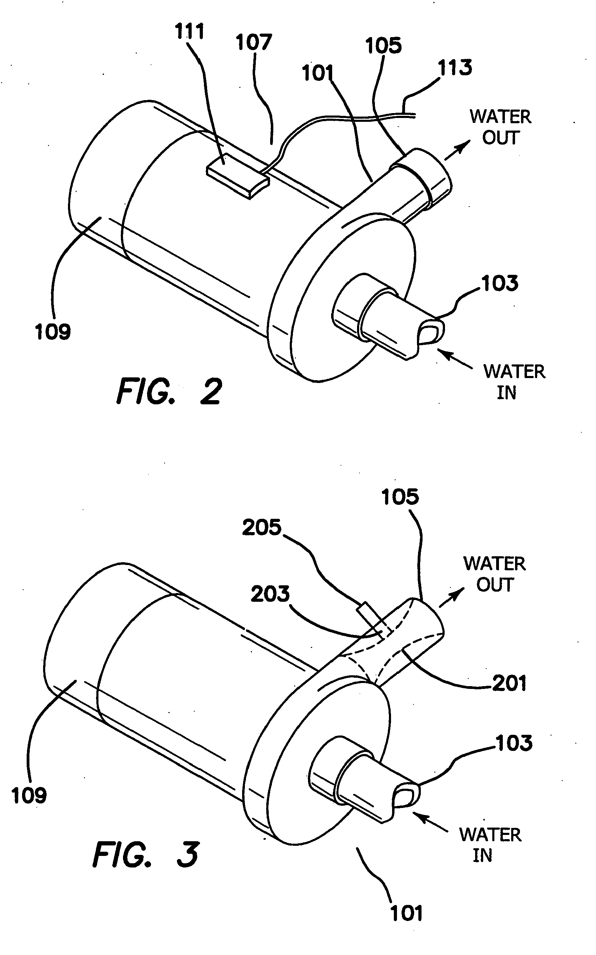

Fig. 2 shows an embodiment of the present invention wherein feature **101** shows a pump housing comprising a water inlet **103** and a water outlet **105.** The pump is a centrifugal pump, wherein the motor powering the pump is contains in motor housing **107,** which in this case is a cylindrical extension of the pump housing along the inlet axis. The motor (not shown) is contained within a compartment in the motor housing at **109,** as is the electrical connection. An ozone generator **111** is shown attached to the outer surface of the motor housing; alternatively, the ozone generator may be located within the compartment **109,** wherein it may benefit from the motor fan for cooling purposes. A conduit **113** is shown leading from the outlet of the ion or ozone generator. It will also be understood that a reservoir containing a sanitizing agent, may in other embodiments replace the ion or ozone generator at either location.

It will also be understood that substantially similar pump assemblies may be used, in other embodiments, to provide water for agricultural purposes; in such a case a reservoir integrated with the pump in the same manner as the ion or ozone generator **111** of this figure may contain a fertilizer, pesticide, herbicide, vitamin, plant hormone or the like, which is added to the water through a conduit **113** at a adducer or injector (preferably through a venturi) elsewhere in the water stream.

Fig. 3 shows a pump housing **101** substantially similar to the pump housing shown in Fig. 2, comprising a water inlet **103** and a water outlet **105**. In this embodiment, the water outlet **105** contains a venturi **201** comprising a region in the outlet in which the throat of the pipe or tube is constricted. At the region of maximum constriction within the venturi **201** a small hole in the pipe or tube leads to a suction port **205** for the attachment of, e.g., a conduit leading from a reservoir or ion or ozone generator (not shown). The suction port may contain a check valve preventing the flow of water or other fluid from the outlet into the suction port **205** or attached conduit.

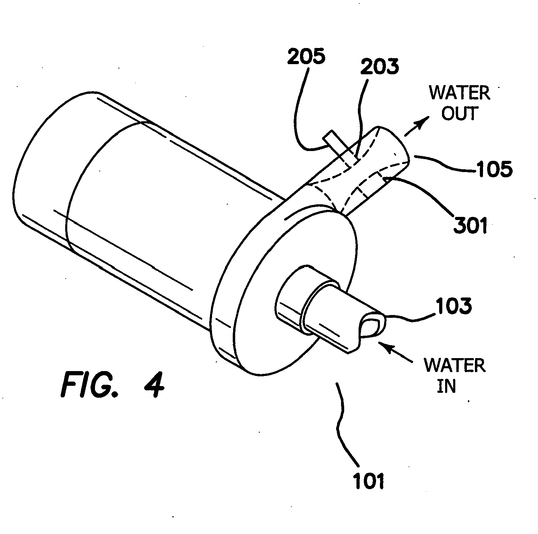

Fig. 4 shows a pump housing **101** substantially similar to the pump housing shown in Fig. 2, comprising a water inlet **103** and a water outlet **105.** Similarly to the embodiment shown in Fig. 3, in this embodiment, the water outlet **105** contains a venturi **201** comprising a region in the outlet in which the throat of the pipe or tube is constricted. At the region of maximum constriction within the venturi **201** a small hole in the pipe or tube leads to a suction port **205** for the attachment of, e.g., a conduit leading from a reservoir or ion or ozone generator (not shown). The suction port may contain a check valve preventing the flow of water or other fluid from the outlet into the suction port **205** or attached conduit.

Although the embodiment of Fig. 3 and Fig. 4 shows the venturi integrated into the pump assembly at the water outlet, those of ordinary skill in the art are aware that the venturi can be included or integrated into the pump housing at any suitable point - for example, at or near the inlet **103** or within the body of the pump itself.

Also part of the integrated pump assembly of Fig. 4 is a pressure bypass valve **301** which is integral to the outlet housing.

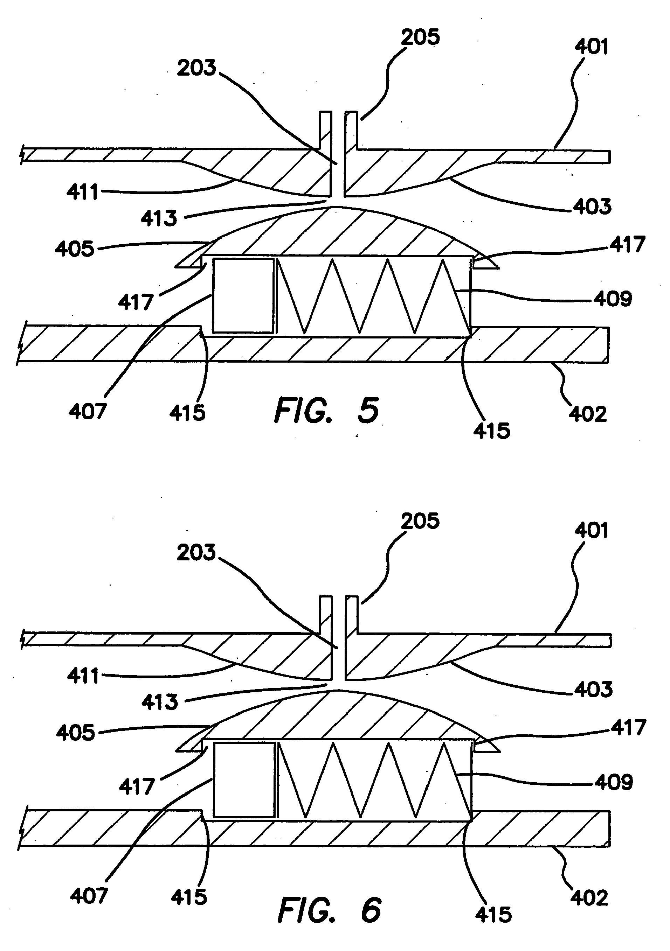

The pressure bypass valve **301** is shown in greater detail in the cross sectional view of the venturi shown in Fig. 5 and Fig. 6.

In the first and presently most preferred embodiment, Fig. 5 shows the outlet **105** of the pump housing, having an upper wall **401** and a lower wall **402.** The flow direction is shown from left to right. As the water flows into the venturi, the upper wall **401** and center divider **405** are smoothly thickened **411** (thereby creating a constriction in the tube or pipe), followed by a region of maximum thickness **413,** and then the upper wall **401** and center divider **405** are smoothly thinned again **403**, thereby widening the pipe throat. Generally, a venturi is most effective if the constriction and widening of the venturi are smooth. Generally, the cross section of a venturi is round but may be other geometric shapes such as, but not limited to, rectangular, elliptical or "D"-shaped.

In this first embodiment, the pressure bypass valve is shown with the lower wall **402** and the center divider **405** comprising the housing for the poppet **407** and spring **409.** The poppet **407** seals against the poppet seat **417** via the force created by the spring **409** pushing against the spring land **415.** Generally, the cross section of a pressure bypass valve poppet such as poppet **407** is round but may be other geometric shapes such as, but not limited to, rectangular, elliptical, spherical or "D"-shaped. Additionally, those of skill in the art are aware that there are many types of pressure relief valves (for example, poppet, swing check, diaphragm, etc.) that may be utilized in a pressure bypass valve, with only one type having been shown here.

The pressure bypass valve functions when the water (or other fluid) pressure is high enough to overcome the spring force in spring **409**. In this case, the poppet **407** is forced away from the poppet seat while the spring **409** is being compressed, allowing water to flow around the poppet **407**, through the spring **409** and spring channel, and remixing with the water mixture exiting the venturi; thereby resulting in lower pressure up stream of the venturi/bypass valve, and increased maximum volume of water flowing through the pipe. Although Fig.5 shows a single venturi and a single bypass valve of this first type side-by-side, they may be staggered or used in multiples with similar results.

Fig. 6 shows the second embodiment of the pressure bypass valve, reference may again be made to Fig. 5. The outlet **105** of the pump housing is again shown with an upper wall **401** and a lower wall **402.** The flow direction is shown from left to right. As the water flows into the venturi, the upper wall **401** is smoothly thickened **411** (thereby creating a constriction in the tube or pipe), followed by a region of maximum thickness **413**, and then the upper wall is **401** smoothly thinned again **403,** thereby widening the pipe throat.

The lower wall 402 of the outlet is formed with a notch 415 placed directly under the region of upper wall thickening, within which a spring **409** and car or poppet **407** are seated, with the car placed facing the direction of water flow. A smoothly rounded cap **405**, comprising the lower portion of the venturi, is seated on top of the car and spring assembly and the latter secured in place within a notch **417** in the cap **405** having a substantially similar width as the notch **415** in the lower wall. The thickest part of the cap **405** is made to coincide with the thickest part of the upper wall **413,** thus creating a narrow venturi throat.

The pressure bypass valve functions when the water pressure is high enough to overcome the spring force in spring **409.** In this case, the poppet or car **407** is forced away from the direction of water flow, while the spring **409** is compressed; the cap **405** seated above the poppet and spring (**407** and **409**) is also forced "downstream", thereby resulting in a wider venturi throat, lower pressure, and increased maximum volume of water flowing through the pipe.

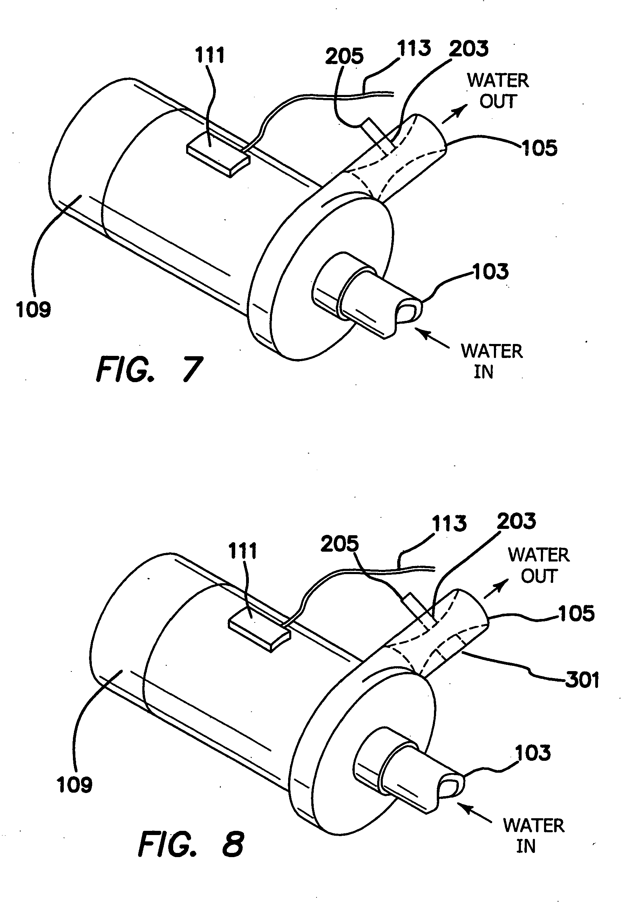

Figures 7 and 8 show pump housings that essentially combine the features of the pump housings shown in Figs. 2 and 3, and Figs. 2 and 4, respectively.

The specific pump type, configurations, and appearances shown in the figures and described herein are merely exemplary, and are not intended to limit the invention solely to those shown. Depending upon preference, and the specific use to which the unit will be put, the person of ordinary skill in the art would clearly know how to select a pump type, and to design an appropriate housing for such pump, so as to combine one or more additional element selected from a heater, a filter, an adductor, a pressure bypass valve, and/or an ion or ozone generator or reservoir for additives to the added to the fluid stream.

Additionally, although the foregoing invention has been described in detail for purposes of clarity of understanding, it will be obvious that certain modifications may be practiced within the scope of the appended claims. All publications and patents and published patent applications cited herein are hereby incorporated by reference in their entirety for all purposes to the same extent as if each were so individually denoted.

Various embodiments of the present invention are described in detail in the detailed description and additional disclosure below. Any feature or combination of features described herein are included within the scope of the present invention provided that the features included in any such combination are not mutually inconsistent as will be apparent from the context, this specification, and the knowledge of one of ordinary skill in the art. In addition, any feature or combination of features may be specifically excluded from any embodiment of the present invention.

## Claims

1. An apparatus for delivering or circulating a fluid comprising:
a) a pump capable of raising, circulating or transferring a fluid comprising a pump housing assembly having a fluid inlet, a motor, and a fluid outlet,
wherein the pump housing assembly further comprises at least one element selected form the group consisting of: a heater assembly component, a filter component, an additive reservoir component, an ion generator component, an ozone generator component, an adductor component, and a pressure bypass valve component.

2. The apparatus of claim 1, wherein the at least one element includes an adductor component comprising a venturi.

3. The apparatus of claim 1, wherein the at least one element includes an ozone generator component.

4. The apparatus of claim 3 wherein said pump housing assembly comprises a motor compartment and the ozone generator is integrated into the motor compartment.

5. The apparatus of claim 3 which includes an adductor component to draw ozone generated by the ozone generator component through a conduit connecting the ozone generator and a suction port of the adductor.

6. The apparatus of claim 1 wherein a plurality of the elements are integrated with the pump housing assembly.

7. The apparatus of claim 1 which includes an additive reservoir component containing an additive selected from the group consisting of a sanitizing component and an agricultural component.

8. The apparatus of claim 2 wherein the venturi comprises a suction port including a check valve.

9. A fluid delivery system comprising a pump, the pump further comprising at least one element selected form the group consisting of: a heater assembly component, a filter component, an additive reservoir component, an ion generator component, an ozone generator component, an adductor component, and a pressure bypass valve component.

10. The fluid delivery system of claim 9 which is coupled to a water circulation system for a pool, a spa or a jetted tub.

11. The fluid delivery system of claim 9 which is coupled to an agricultural watering system.

12. The fluid delivery system of claim 9 which is coupled to a laundry system.

13. The fluid delivery system of claim 9 which is coupled to a well water delivery system.

14. The fluid delivery system of claim 9 wherein the at least one element comprises an adductor component.

15. The fluid delivery system of claim 9 wherein the at least one element comprises an ozone generator component.
